(19) Europäisches Patentamt
European Patent Office
Office européen des brevets

(11) EP 0 923 289 B1

(12) # EUROPÄISCHE PATENTSCHRIFT

(45) Veröffentlichungstag und Bekanntmachung des Hinweises auf die Patenterteilung:
**03.04.2002 Patentblatt 2002/14**

(21) Anmeldenummer: **97940101.5**

(22) Anmeldetag: **21.08.1997**

(51) Int Cl.[7]: **A01N 47/24**
// (A01N47/24, 43:40)

(86) Internationale Anmeldenummer:
**PCT/EP97/04541**

(87) Internationale Veröffentlichungsnummer:
**WO 98/08385 (05.03.1998 Gazette 1998/09)**

(54) **FUNGIZIDE MISCHUNGEN**

FUNGICIDAL MIXTURES

MELANGES FONGICIDES

(84) Benannte Vertragsstaaten:
**AT BE CH DE DK ES FI FR GB GR IE IT LI NL PT SE**
Benannte Erstreckungsstaaten:
**SI**

(30) Priorität: **30.08.1996 DE 19635079**

(43) Veröffentlichungstag der Anmeldung:
**23.06.1999 Patentblatt 1999/25**

(73) Patentinhaber: **BASF AKTIENGESELLSCHAFT**
**67056 Ludwigshafen (DE)**

(72) Erfinder:
- **MÜLLER, Bernd**
  **D-67227 Frankenthal (DE)**
- **SAUTER, Hubert**
  **D-68167 Mannheim (DE)**
- **AMMERMANN, Eberhard**
  **D-64646 Heppenheim (DE)**
- **LORENZ, Gisela**
  **D-67434 Neustadt (DE)**
- **STRATHMANN, Siegfried**
  **D-67117 Limburgerhof (DE)**
- **SCHERER, Maria**
  **D-76829 Landau (DE)**
- **SCHELBERGER, Klaus**
  **D-67161 Gönnheim (DE)**
- **LEYENDECKER, Joachim**
  **D-68526 Ladenburg (DE)**

(56) Entgegenhaltungen:
**EP-A- 0 545 099**
**WO-A-96/03047**
**WO-A-97/10716**
**DE-A- 4 423 613**

EP 0 923 289 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft eine fungizide Mischun welche

a) ein Carbamat der Formel I.

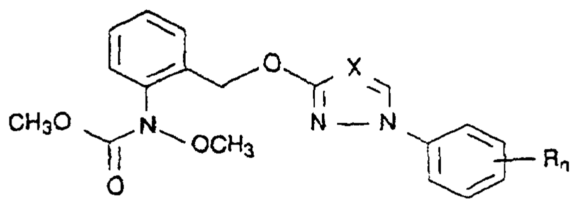

(I)

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, oder eines seiner Salze oder Addukte, sowie

b) ein Anilid der Formel II

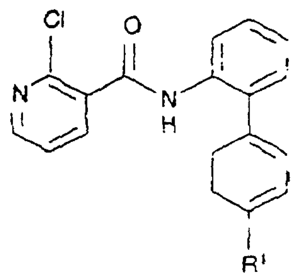

(II)

in der $R^1$ für Fluor oder Chlor steht, oder eines seiner Salze oder Addukte, in einer synergistisch wirksamen Menge enthält.

Außerdem betrifft die Erfindung Verfahren zur Bekämpfung von Schadpilzen mit Mischungen der Verbindungen I und II und die Verwendung der Verbindung I und der Verbindung II zur Herstellung derartiger Mischungen.

Die Verbindungen der Formel I, ihre Herstellung und ihre Wirkung gegen Schadpilze ist aus der Literatur bekannt (PCT WO 96/01,256 und WO 96/01,258).

Ebenfalls bekannt sind die Verbindungen II (EP-A 545 099, EP-A 589 301).

Außerdem werden in der DE Anm. Nr. 19 535 366.8 in allgemeiner Form synergistische Mischungen mit fungiziden Eigenschaften beschrieben, die einerseits eine atmungshemmende Verbindung und andererseits ein Anilidderivat einer allgemeinen Formel, die auch die erfindungsgemäßen Verbindungen II umfaßt, enthalten. Die erfindungsgemäßen Carbamate der Formel I wirken ebenfalls atmungshemmend; Mischungen mit Carbamaten werden in der DE Anm. Nr. 19 535 366.8 jedoch nicht beschrieben.

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindung I und der Verbindung II oder bei Anwendung der Verbindung I und der Verbindungen II nacheinander Schadpilze besser bekämpfen lassen, als mit den Einzelverbindungen allein.

Die Formel I repräsentiert insbesondere Carbamate, in denen die Kombination der Substituenten einer Zeile der folgenden Tabelle entspricht:

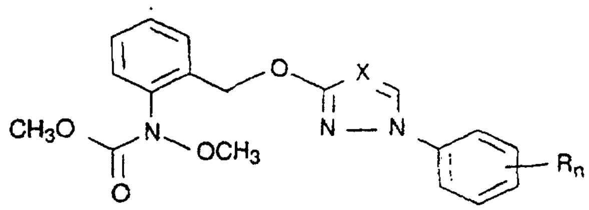

(I)

| Nr. | X | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | 2-$CH_3$ |
| I.11 | N | 3-$CH_3$ |
| I.12 | N | 4-$CH_3$ |
| I.13 | N | 2-$CH_2CH_3$ |
| I.14 | N | 3-$CH_2CH_3$ |
| I.15 | N | 4-$CH_2CH_3$ |
| I.16 | N | 2-$CH(CH_3)_2$ |
| I.17 | N | 3-$CH(CH_3)_2$ |
| I.18 | N | 4-$CH(CH_3)_2$ |
| I.19 | N | 2-$CF_3$ |
| I.20 | N | 3-$CF_3$ |
| I.21 | N | 4-$CF_3$ |
| I.22 | N | 2,4-$F_2$ |
| I.23 | N | 2,4-$Cl_2$ |
| I.24 | N | 3,4-$Cl_2$ |
| I.25 | N | 2-Cl, 4-$CH_3$ |
| I.26 | N | 3-Cl, 4-$CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |

(fortgesetzt)

| Nr. | X | $R_n$ |
|---|---|---|
| I.33 | CH | 2-Br |
| I.34 | CH | 3-Br |
| I.35 | CH | 4-Br |
| I.36 | CH | $2\text{-}CH_3$ |
| I.37 | CH | $3\text{-}CH_3$ |
| I.38 | CH | $4\text{-}CH_3$ |
| I.39 | CH | $2\text{-}CH_2CH_3$ |
| I.40 | CH | $3\text{-}CH_2CH_3$ |
| I.41 | CH | $4\text{-}CH_2CH_3$ |
| I.42 | CH | $2\text{-}CH(CH_3)_2$ |
| I.43 | CH | $3\text{-}CH(CH_3)_2$ |
| I.44 | CH | $4\text{-}CH(CH_3)_2$ |
| I.45 | CH | $2\text{-}CF_3$ |
| I.46 | CH | $3\text{-}CF_3$ |
| I.47 | CH | $4\text{-}CF_3$ |
| I.48 | CH | $2,4\text{-}F_2$ |
| I.49 | CH | $2,4\text{-}Cl_2$ |
| I.50 | CH | $3,4\text{-}Cl_2$ |
| I.51 | CH | $2\text{-}Cl, 4\text{-}CH_3$ |
| I.52 | CH | $3\text{-}Cl, 4\text{-}CH_3$ |

Besonders bevorzugt werden die Verbindungen I.12, I.23, I.32 und I.38.

Die Verbindungen I sind wegen des basischen Charakters der in ihnen enthaltenden Stickstoffatome in der Lage, mit anorganischen oder organischen Säuren oder mit Metallionen Salze oder Addukte zu bilden.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekampfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen. Zierpflanzen, Zukkerrohr sowie an einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse. Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudocercosporella-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikaticn im allgemeinen keine Auswirkung auf den Bekämpfungserfolg hat.

Die Verbindungen I und II werden üblicherweise in einem Gewichtsverhältnis von 10:1 bis 0,025:1, vorzugsweise 5:1 bis 0,05:1, insbesondere 1:1 bis 0,05:1 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,5 bis 3,0 kg/ha.

Die Aufwandmengen liegen dabei für die Verbindungen I bei 0,01 bis 2,5 kg/ha, vorzugsweise 0,05 bis 2,5 kg/ha, insbesondere 0,1 bis 1,0 kg/ha.

Die Aufwandmengen für die Verbindungen II liegen entsprechend bei 0,01 bis 10 kg/ha, vorzugsweise 0,05 bis 5 kg/ha, insbesondere 0,05 bis 2,0 kg/ha.

Bei der Saatgutbehandlung werden im allgemeinen Aufwandmengen an Mischung von 0,001 bis 250 g/kg Saatgut, vorzugsweise 0,01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsulfaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylenalkylether, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrun) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Wirksamkeit gegen Botrytis cinerea

Die Wirkstoffe wurden getrennt oder gemeinsam als 10 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Paprikasämlinge der Sorte "Neusiedler Ideal Elite" wurden, nachdem sich 4 - 5 Blätter gut entwickelt hatten, mit wäßrigen Suspensionen, die 80 Gew.-% Wirkstoff und 20 Gew.-% Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 - 24 °C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedeckten.

Die Auswertung erfolgte durch Feststellung der befallenen Blattflächen in Prozent. Diese Prozent-Werte wurden in Wirkungsgrade umgerechnet. Der Wirkungsgrad (W) wurde nach der Formel von Abbot wie folgt bestimmt:

$$W = (1 - \alpha) \cdot 100/\beta$$

$\alpha$ entspricht dem Pilzbefall der behandelten Pflanzen in % und
$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b.

Die synergistische Wirkung der erfindungsgsmäßen Mischungen ließ sich durch die folgenden Versuche zeigen:

Anwendungsbeispiele

Die Versuche wurden mit folgenden Verbindungen durchgeführt:

I.A entspricht Verbindung 1.32 der Tabelle auf Seite 3 der Anmeldung
I.B entspricht Verbindung I.38 der Tabelle auf Seite 3 der Anmeldung
II.A siehe Formel II gemäß Anspruch 1, in der $R^1$ Chlor bedeutet
II.B siehe Formel II gemäß Anspruch 1, in der $R^1$ Fluor bedeutet

Anwendungsbeispiel 1

Wirksamkeit gegen Phytophthora infestans

Blätter von Topfpflanzen der Sorte "Große Fleischtomate" wurden mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am folgenden Tag wurden die Blätter mit einer wäßrigen Zoosporenaufschwemmung von Phytophthora infestans infiziert. Anschließend wurden die Pflanzen in einer wasserdampfgesättigten Kammer bei Temperaturen zwischen 16 und 18°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. "Calculating synergistic and antagonistic responses of herbicide Combinations", Weeds, 15, S. 20 - 22, 1967) ermittelt und mit den beobachteten Wirkungsgraden verglichen.

Unbehandelte Kontrolle: 88 % Befall

Tabelle 1.1:

| Wirkungsgrad der einzelnen Wirkstoffe | | |
|---|---|---|
| Wirkstoff | Wirkstoffkonzentration in der Spritzbrühe in ppm | Wirkungsgrad in % der unbehandelten Kontrolle |
| I.A | 3.1<br>0.8<br>0.2 | 55<br>43<br>21 |
| I.B | 3.1<br>0.8<br>0.2 | 55<br>43<br>21 |
| II.A | 3.1<br>0.8<br>0.2 | 0<br>0<br>0 |
| II.B | 3.1<br>0.8<br>0.2 | 0<br>0<br>0 |

Tabelle 1.2:

| Wirkungsgrad der Mischung | | |
|---|---|---|
| Wirkstoffmischung | beobachteter Wirkungsgrad | erwarteter Wirkungsgrad*) |
| 3.1 ppm I.A + 3.1 ppm II.A Mischungsverhältnis 1 : 1 | 89 | 55 |
| 0.8 ppm I.A + 0.8 ppm II.A Mischungsverhältnis 1 : 1 | 77 | 43 |
| 0.2 ppm I.A + 0.2 ppm II.A Mischungsverhältnis 1 : 1 | 66 | 21 |
| 3.1 ppm I.A + 3.1 ppm II.B Mischungsverhältnis 1 : 1 | 97 | 55 |
| 0.8 ppm I.A + 0.8 ppm II.B Mischungsverhältnis 1 :1 | 83 | 43 |
| 0.2 ppm I.A + 0.2 ppm II.B Mischungsverhältnis 1 : 1 | 43 | 21 |
| 0.2 ppm I.B + 0.2 ppm II.B Mischungsverhältnis 1 :1 | 53 | 21 |

*) berechnet nach der Colby-Formel

Aus den Ergebnissen des Versuches geht hervor, daß der beobachteter Wirkungsgrad in allen Mischungsverhältnissen höher ist, als der nach der Colby-Formel vorausberechnete Wirkungsgrad.

Anwendungsbeispiel 2

Wirksamkeit gegen Botrytis cinerea an Paprikaschoten

Scheiben von grünen Paprikaschoten wurden mit einer wäßrigen Wirkstoffaufbereitung, die aus einer Stammlösung aus 10 % Wirkstoff, 63 % Cyclohexanon und 27 % Emulgiermittel angesetzt wurde, tropfnaß besprüht. 2 Stunden nach dem Antrocknen des Spritzbelages wurden die Fruchtscheiben mit einer Sporensuspension von Botrytis cinerea, die 1,7 x $10^6$ Sporen pro ml einer 2 %igen Biomalzlösung enthielt, inokuliert. Die inokulierten Fruchtscheiben wurden anschließend in feuchten Kammern bei 18°C für 4 Tage inkubiert. Dann erfolgte visuell die Auswertung des Botrytis-Befalls auf den befallenen Fruchtscheiben.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der obengenannten Colby-Formel ermittelt und mit den beobachteten Wirkungsgraden verglichen.

Unbehandelte Kontrolle: 97 % Befall

Tabelle 2.1:

| Wirkungsgrad der einzelnen Wirkstoffe | | |
|---|---|---|
| Wirkstoff | Wirkstoffkonzentration in der Spritzbrühe in ppm | Wirkungsgrad in % der unbehandelten Kontrolle |
| I.A | 3.1<br>0.8 | 38<br>2 |
| I.B | 3.1 | 28 |
| II.A | 3.1 | 28 |
| II.B | 3.1<br>0.8 | 69<br>0 |

Tabelle 2.2:

| Wirkungsgrad der Mischung | | |
|---|---|---|
| Wirkstoffmischung | beobachteter Wirkungsgrad | erwarteter Wirkungsgrad*) |
| 3.1 ppm I.A + 3.1 ppm II.A Mischungsverhältnis 1 : 1 | 79 | 56 |
| 3.1 ppm I.B + 3.1 ppm II.A Mischungsverhältnis 1 : 1 | 69 | 48 |
| 0.8 ppm I.A + 0.8 ppm II.B Mischungsverhältnis 1 :1 | 49 | 2 |
| 3.1 ppm I.B + 3.1 ppm II.B Mischungsverhältnis 1 : 1 | 90 | 78 |

*) berechnet nach der Colby-Formel

Aus den Ergebnissen des Versuches geht hervor, daß der beobachteter Wirkungsgrad in allen Mischungsvernältnissen höher ist, als der nach der Colby-Formel vorausberechnete Wirkungsgrad.

Anwendungsbeispiel 3

Wirksamkeit gegen Botrytis cinerea an Paprika

Paprikasämlinge der Sorte "Neusiedler Ideal Elite" wurden, nachdem sich 4 - 5 Blätter gut entwickelt hatten, mit einer wäßrigen Wirkstoffaufbereitung, die aus einer Stammlösung aus 10 % Wirkstoff, 63 % Cyclohexanon und 27 % Emulgiermittel angesetzt wurde, bis zur Tropfnässe besprüht. Am nächsten Tag wurden die behandelten Pflanzen mit einer Sporensuspension von Botrytis cinerea, die $1.7 \times 10^6$ Sporen/ml in einer 2 %igen wäßrigen Biomalzlösung enthielt, inokuliert. Anschließend wurden die Versuchspflanzen in eine Klimakammer mit 22 bis 24°C und hoher Luftfeuchtigkeit gestellt. Nach 5 Tagen konnte das Ausmaß des Pilzbefall auf den Blättern visuell in % ermittelt werden.
Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der obengenannten Colby-Formel ermittelt und mit den beobachteten Wirkungsgraden verglichen.

Unbehandelte Kontrolle: 72 % Befall

Tabelle 3.1:

| Wirkungsgrad der einzelnen Wirkstoffe | | |
|---|---|---|
| Wirkstoff | Wirkstoffkonzentration in der Spritzbrühe in ppm | Wirkungsgrad in % der unbehandelten Kontrolle |
| I.A | 3.1<br>0.8 | 44<br>3 |
| I.B | 3.1 | 0 |
| II.A | 3.1 | 0 |
| II.B | 3.1<br>0.8 | 76<br>0 |

Tabelle 3.2:

| Wirkungsgrad der Mischung | | |
|---|---|---|
| Wirkstoffmischung | beobachteter Wirkungsgrad | erwarteter Wirkungsgradz*) |
| 3.1 ppm I.A + 3.1 ppm II.A Mischungsverhältnis 1 : 1 | 86 | 44 |
| 3.1 ppm I.B + 3.1 ppm II.A Mischungsverhältnis 1 : 1 | 72 | 0 |
| 0.8 ppm I.A + 0.8 ppm II.B Mischungsverhältnis 1 : 1 | 30 | 3 |
| 3.1 ppm I.B + 3.1 ppm II.B Mischungsverhältnis 1 : 1 | 93 | 76 |

*) berechnet nach der Colby-Formel

Aus den Ergebnissen des Versuches geht hervor, daß der beobachteter Wirkungsgrad in allen Mischungsverhältnissen höher ist, als der nach der Colby-Formel vorausberechnete Wirkungsgrad.

## Patentansprüche

**1.** Fungizide Mischung, enthaltend

a) ein Carbamat der Formel I,

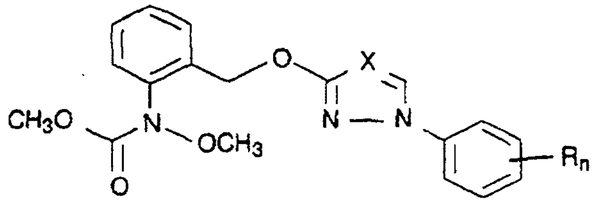

(I)

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, oder eines seiner Salze oder Addukte, sowie

b) ein Anilid der Formel II

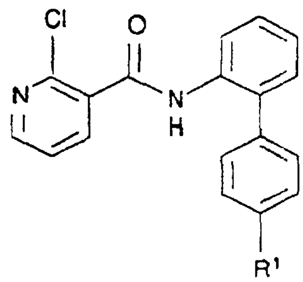

(II)

in der $R^1$ für Fluor oder Chlor steht, oder eines seiner Salze oder Addukte, in einer synergistisch wirksamen Menge.

**2.** Fungizide Mischung nach Anspruch 1, **dadurch gekennzeichnet, daß** das Gewichtsverhältnis der Verbindung I, ihres Salzes oder Adduktes, zu der Verbindung II 10:1 bis 0,05:2 beträgt.

**3.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit der Verbindung der Formel I, einem ihrer Salze oder Addukte gemäß Anspruch 1 und der Verbindung der Formel II gemäß Anspruch 1 behandelt.

**4.** Verfahren nach Anspruch 3, **dadurch gekennzeichnet, daß** man die Verbindung I, eines ihrer Salze oder Addukte gemäß Anspruch 1 und die Verbindung II gemäß Anspruch 1 gleichzeitig, und zwar gemeinsam oder getrennt, oder nacheinander ausbringt.

**5.** Verfahren nach Anspruch 3 oder 4, **dadurch gekennzeichnet, daß** man die Verbindung I, eines ihrer Salze oder Addukte gemäß Anspruch 1 in einer Menge von 0,01 bis 2,5 kg/ha aufwendet.

**6.** Verfahren nach den Ansprüchen 3 bis 5, **dadurch gekennzeichnet, daß** man die Verbindung II gemäß Anspruch 1 in einer Menge von 0,01 bis 10 kg/ha aufwendet.

**7.** Verwendung der Verbindung I, eines ihrer Salze oder Addukte gemäß Anspruch 1 zur Herstellung einer fungizid wirksamen synergistischen Mischung gemäß Anspruch 1.

**8.** Verwendung der Verbindung II gemäß Anspruch 1 zur Herstellung einer fungizid wirksamen synergistischen Mischung gemäß Anspruch 1.

**9.** Mittel nach Anspruch 1, das in zwei Teilen konditioniert ist, wobei der eine Teil Verbindungen der Formel I gemäß Anspruch 1 in einem festen oder flüssigen Träger enthält und der andere Teil Verbindungen der Formel II gemäß Anspruch 1 in einem festen oder flüssigen Träger enthält.

## Claims

1. A fungicidal mixture comprising

a) a carbamate of the formula I

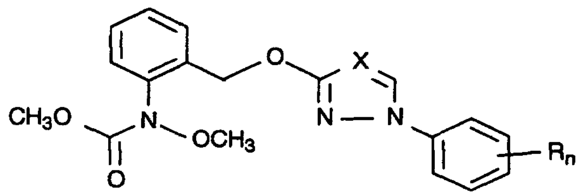

(I)

where X is CH and N, n is 0, 1 or 2 and R is halogen, $C_1$-$C_4$-alkyl and $C_1$-$C_4$-haloalkyl, it being possible for the radicals R to be different when n is 2, or a salt or adduct thereof, and

b) an anilide of the formula II

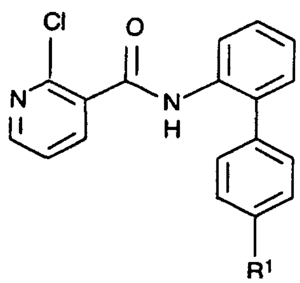

(II)

where $R^1$ is fluorine or chlorine, or a salt or adduct thereof, in a synergistically active amount.

2. A fungicidal mixture as claimed in claim 1, wherein the weight ratio of the compound I or of a salt or adduct thereof to the compound II is 10:1 to 0.05:2.

3. A method of controlling harmful fungi, which comprises treating the harmful fungi, their environment, or the plants, seeds, soils, areas, materials or spaces to be kept free from them with the compound of the formula I or a salt or adduct thereof as set forth in claim 1 and the compound of the formula II as set forth in claim 1.

4. A method as claimed in claim 3, wherein the compound I or a salt or adduct thereof as set forth in claim 1 and the compound II as set forth in claim 1 are applied simultaneously, ie. together or separately, or in succession.

5. A method as claimed in claim 3 or 4, wherein the compound I or a salt or adduct thereof as set forth in claim 1 is applied at a rate of 0.01 to 2.5 kg/ha.

6. A method as claimed in any of claims 3 to 5, wherein the compound II as set forth in claim 1 is applied at a rate of from 0.01 to 10 kg/ha.

7. The use of the compound I or of a salt or adduct thereof as set forth in claim 1 for the preparation of a fungicidally active synergistic mixture as claimed in claim 1.

8. The use of the compound II as set forth in claim 1 for the preparation of a fungicidally active synergistic mixture as claimed in claim 1.

9. A composition of claim 1 which is conditioned in two parts, one part comprising compounds of the formula I as set forth in claim 1 in a solid or liquid carrier and the other part comprising compounds of the formula II as set forth in claim 1 in a solid or liquid carrier.

## Revendications

**1.** Mélange fongicide contenant

a) un carbamate de formule I

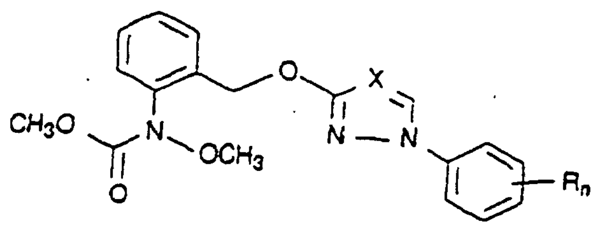

(I)

dans laquelle X représente CH et N, n est égal à 0, 1 ou 2 et R représente un halogène, un groupe alkyle en C1-C4 ou halogénoalkyle en C1-C4, les substituants R pouvant être différents lorsque n est égal à 2, ou l'un de ses sels ou adducts, et

b) un anilide de formule II

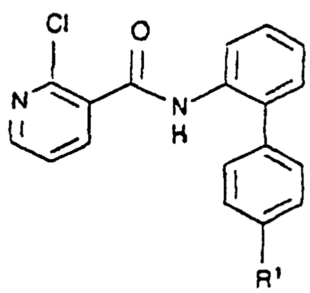

(II)

dans laquelle $R^1$ représente le fluor ou le chlore, ou l'un de ses sels ou adducts, en quantité synergétique efficace.

**2.** Mélange fongicide selon la revendication 1, **caractérisé par le fait que** les proportions relatives entre le composé I, son sel ou adduct, et le composé II vont de 10 : 1 à 0,05 : 2.

**3.** Procédé pour combattre les mycètes nuisibles, **caractérisé par le fait que** l'on traite les mycètes nuisibles, leur habitat ou les végétaux, semences, sols, aires, matériaux ou locaux qu'on veut protéger contre les mycètes nuisibles par le composé de formule I, l'un de ses sels ou adducts selon la revendication 1 et le compposé de formule II selon la revendication 1.

**4.** Procédé selon la revendication 3, **caractérisé par le fait que** l'on applique le composé I, l'un de ses sels ou adducts selon la revendication 1 et le composé II selon la revendication 1 en même temps, ensemble ou séparément, ou successivement.

**5.** Procédé selon la revendication 3 ou 4, **caractérisé par le fait que** l'on utilise le composé I, l'un de ses sels ou adducts selon la revendication 1 en quantité de 0,01 à 2,5 kg/ha.

**6.** Procédé selon les revendications 3 à 5, **caractérisé par le fait que** l'on applique le composé II selon la revendication 1 en quantité de 0,01 à 10 kg/ha.

**7.** Utilisation du composé I, de l'un de ses sels ou adducts selon la revendication 1, pour la préparation d'un mélange fongicide à activité synergétique selon la revendication 1.

**8.** Utilisation du composé II selon la revendication 1 pour la préparation d'un mélange fongicide à activité synergétique selon la revendication 1.

**9.** Produit selon la revendication 1, conditionné en deux parties, l'une d'elles contenant des composés de formule I selon la revendication 1 dans un véhicule ou liquide et l'autre des composés de formule II selon la revendication 1, dans un véhicule solide ou liquide.